## Europäisches Patentamt
## European Patent Office
## Office européen des brevets

(11) Veröffentlichungsnummer: **0 386 244**
**A1**

(12)
# EUROPÄISCHE PATENTANMELDUNG
## veröffentlicht nach Art. 158 Abs. 3 EPÜ

(21) Anmeldenummer: **89900943.5**

(51) Int. Cl.⁵: **B23Q 11/10**

(22) Anmeldetag: **23.08.88**

(86) Internationale Anmeldenummer:
**PCT/SU88/00163**

(87) Internationale Veröffentlichungsnummer:
**WO 90/02021 (08.03.90 90/06)**

(43) Veröffentlichungstag der Anmeldung:
**12.09.90 Patentblatt 90/37**

(84) Benannte Vertragsstaaten:
**AT CH DE FR GB IT LI SE**

(71) Anmelder: **BELORUSSKY POLITEKHNICHESKY INSTITUT**
**Leninksy pr., 65**
**Minsk, 220027(SU)**

(72) Erfinder: **JUDOVIN, Lev Grigorievich**
**ul. Uralskaya, 10-26**
**Minsk, 220037(SU)**
Erfinder: **SERGEEV, Boris Grigorievich**
**ul. Ya.Kolasa, 84-18**
**Minsk, 220090(SU)**

(74) Vertreter: **Patentanwälte Zellentin & Partner**
**Zweibrückenstrasse 15**
**D-8000 München 2(DE)**

(54) **ANORDNUNG FÜR DIE ZUFUHR EINER KÜHLUNGSSCHMIERFLÜSSIGKEIT ZU EINEM SCHNEIDINSTRUMENT.**

(57) Die erfindungsgemäße Einrichtung enthält ein Gehäuse (1) mit einer Öffnung (2) für einen Dorn (3) mit Schneidwerkzeug (4), eine Dichtung (8), die am Gehäuse (1) in der Zone des Zusammenwirkens des Schneidwerkzeuges (4) mit einem zu bearbeitenden Werkstück (6) angebracht ist, Rohrleitungen (16, 18) jeweils für die Zu- und Abführung der Kühlflüssigkeit und einen Durchlaß (10) zum Entfernen von Spänen. In der Einrichtung ist ein Sicherheitsventil (19) vorgesehen, das in der Rohrleitung (18) für die Abführung der Kühlflüssigkeit eingebaut ist. Das Gehäuse (1) ist in der Anordnungszone des Dornes (3) mit einer Dichtung (5) versehen. Der Durchläß (10) zum Entfernen von Spänen und der Hohlraum (9) des Gehäuses (1) sind auf verschiedenen Seiten der Stirnfläche (11) des Gehäuses (1) in der Zone des Zusammenwirkens des Schneidwerkzeuges (4) mit dem zu bearbeitenden Werkstücke (6) angeordnet.

## EINRICHTUNG FÜR DIE KÜHLFLÜSSIGKEITS-
## ZUFÜHRUNG ZU EINEM SCHNEIDWERKZEUG

Die Erfindung bezieht sich auf das Gebiet der Metallbearbeitung, insbesondere auf eine Einrichtung für die
Kühlflüssigkeitszuführung zu einem Schneidwerkzeug.

Am vorteilhaftesten ist die vorliegende Erfindung zum
Bohren von tiefen Bohrungen mittels Spiralbohrern anzu-
wenden.

Zur Zeit ist die Bearbeitung von tiefen Bohrungen mittels Spiralbohrern durch niedrige
Schnittgeschwindigkeiten und einen erhöhten Schneidwerk-
zeugverbrauch gekennzeichnet. Dies hängt damit zusammen, daß bei einer
großen Bohrtiefe das Zuführen der Kühlflüssigkeit zu den
Schneiden des Spiralbohrers erschwert ist.

Bekannt ist eine Einrichtung für die Kühlflüssigkeitszuführung zu einem Schneidwerkzeug bei horizontaler
Bohranordnung, die eine mit einer Kühlflüssigkeit gefüllte Wanne enthält, in welcher ein zu bearbeitendes
Werkstück untergebracht und festgehalten ist, derart,
daß der Kühlflüssigkeitsspiegel höher als die zu bearbeitende Bohrung liegt (G.I. Melamed u.a. "Agregatnye stanki"
/Aggregat-Werkzeugmaschinen/, 1964, Verlag Mashgiz
/Moskau/).

Bei kleiner Bohrtiefe läuft die Kühlflüssigkeit in
die zu bearbeitende Bohrung hinein, schmiert und kühlt
die Schneidkanten des Bohrers. Bei der Bearbeitung
von tiefen Bohrungen arbeitet der Bohrer praktisch
trocken, weil sich an der Bohrerspitze ein "Dampfpolster"
bildet, das ein Vordringen der Kühlflüssigkeit zu den
Schneidkanten verhindert, und überdies pumpt der Spiralbohrer, als eine "Schraubenpumpe" arbeitend, die Kühlflüssigkeit aus der Bohrung heraus.Die Gesamtwirkung dieser Faktoren macht es notwendig, den Bohrer aus der zu
bearbeitenden Bohrung periodisch herauszuführen, was zur
Verminderung der Bearbeitungsleistung führt.

- 2 -

Bekannt ist eine Einrichtung für die unter Druck erfolgende Kühlflüssigkeitszuführung zu einem Schneidwerkzeug, nämlich zu einer Zerspanungszone, die ein Gehäuse enthält, das mit einem Deckel hermetisch verschlossen ist, in welchem eine mit einer Dichtung versehene Bohrung ausgeführt ist, durch die ein Dorn mit einem Schneidwerkzeug hindurchgeführt ist (Izvestia vysshikh uchebnykh zavedeny, Mashinostroenie, Nr. 12, 1969 /Moskau/, V.M. Yaroslavtsev, V.V. Sabelnikov "Obrabotka rezaniem v usloviyakh vysokykh staticheskikh davleny smazochno-okhlazhdajuschei sredy" /Spanabhebende Formung unter den Bedingungen von hohen statischen Drücken eines Schmier- und Kühlmediums/, SS. 172-176). Innerhalb des Gehäuses ist ein zu bearbeitendes Werkstück untergebracht. Dem Hohlraum des Gehäuses wird mittels einer Pumpe eine Kühlflüssigkeit unter erforderlichem Druck zugeführt. Dank dem hohen Druck im Gehäuse dringt die Kühlflüssigkeit unmittelbar zu den Schneiden des Werkzeuges vor und erhöht bedeutend dessen Standzeit.

Die Anordnung des zu bearbeitenden Werkstücks innerhalb des hermetisch abzudichtenden Gehäuses führt jedoch zu erheblichen Zeitverlusten für das Undichtmachen, das Aus- und Einspannen des zu bearbeitenden Werkstücks, die Füllung des Gehäuses mit der Kühlflüssigkeit und seine hermetische Abdichtung, was die Leistung wesentlich mindert; das Erfordernis einer Hochdruckpumpe verteuert die Konstruktion und macht sie komplizierter.

Es ist eine Einrichtung für die Zuführung einer Schmier- und Kühlflüssigkeit zu einem Schneidwerkzeug bekannt, enthaltend ein Gehäuse mit einer Bohrung für einen Dorn mit Schneidwerkzeug, eine Dichtung, die am Gehäuse in der Zone des Zusammenwirkens mit einem zu bearbeitenden Werkstück angebracht ist, Rohrleitungen für die Zuführung der Schmier- und Kühlflüssigkeit ins Gehäuse und ihre Abführung aus demselben sowie ein mit dem Hohlraum des Gehäuses in Verbindung stehendes Fenster zum Entfernen von Spänen (Deutsche Patentschrift

EP 0 386 244 A1

- 3 -

Nr. 747139). Das Gehäuse ist in Form einer Glocke ausgebildet, die sich auf der Oberfläche des zu bearbeitenden Werkstücks mit ihrem unteren Teil abstützt.

Die Kühlflüssigkeit wird dem Inneren des Gehäuses über einen Stutzen einer Rohrleitung für die Zuführung dieser Flüssigkeit zugeleitet, wobei der Stutzen in eine Gehäusewand eingeschraubt ist. Das Fenster zum Entfernen von Spänen sowie zum Ablauf der Kühlflüssigkeit befindet sich oberhalb des Stutzens. Die Lage dieses Fensters zum Entfernen von Spänen bestimmt die Höhe des Standes der Schmier- und Kühlflüssigkeit. Der Stand dieser Flüssigkeit erzeugt einen statischen Druck, unter dessen Wirkung die Kühlflüssigkeit in die zu bearbeitenden Bohrungen eindringt und die Standzeit des Schneidwerkzeuges erhöht.

Allerdings gestattet diese Einrichtung es nicht, einen hinreichend hohen Kühlflüssigkeitsdruck zu erzeugen, und zwar deshalb, weil das Gehäuse nicht hermetisch geschlossen ist und der Druck nur durch die Höhe des Kühlflüssigkeitsstandes bestimmt wird, welcher seinerseits durch die Abmessungen des Gehäuses begrenzt ist. Dies hat eine niedrige Leistung des Bohrers zur Folge. Darüber hinaus ist die vorstehend beschriebene Einrichtung nur für eine vertikale Bohranordnung bestimmt.

Der vorliegenden Erfindung liegt die Aufgabe zugrunde, eine Einrichtung für die Kühlflüssigkeitszuführung zu einem Schneidwerkzeug mit einer solchen konstruktiven Ausführung zu schaffen, welche die Erzeugung eines verhältnismäßig hohen statischen Kühlflüssigkeitsdruckes ohne Einsatz einer Hochdruckpumpe gewährleisten sowie es gestatten würde, sie bei horizontaler und vertikaler Bearbeitung von Werkstücken beliebiger Außenmaße und Formen zu verwenden.

Die gestellte Aufgabe wird dadurch gelöst, daß in der Einrichtung für die Kühlflüssigkeitszuführung zu einem Schneidwerkzeug, enthaltend ein Gehäuse mit einer Öffnung für einen Dorn mit Schneidwerkzeug, eine Dichtung, die am Gehäuse in der Zone des Zusammenwirkens des Schneidwerkzeugs mit einem zu bearbeitenden Werkstück angebracht ist, eine Rohrleitung für die Zuführung der Kühlflüssigkeit ins Gehäuse, eine Rohrleitung für die Abführung der Kühlflüssigkeit aus dem Gehäuse und einen mit dem Hohlraum des Gehäuses in Verbindung stehenden Durchlaß zum Entfernen von Spänen, erfindungsgemäß ein Sicherheitsventil vorgesehen ist, das in der Rohrleitung für die Abführung der Kühlflüssigkeit eingebaut ist, das Gehäuse in der Anordnungszone des Dornes mit einer Dichtung versehen ist, sowie der Durchlaß zum Entfernen von Spänen und der Hohlraum des Gehäuses auf verschiedenen Seiten der Stirnfläche des Gehäuses in der Zone des Zusammenwirkens des Schneidwerkzeuges mit dem zu bearbeitenden Werkstück angeordnet sind.

Die erfindungsgemäße Einrichtung gestattet es, die Leistung bei der Bearbeitung von Bohrungen in Werkstükken beliebiger Außenmaße und Formen mittels eines Schneidwerkzeugs zu steigern und die Standzeit dieses Werkzeuges zu erhöhen. Dies wird dadurch erreicht, daß die Schmier- und Kühlflüssigkeit unter der Wirkung eines hinreichend hohen statischen Drucks, der im Gehäuse erzeugt wird, zu den Schneiden des Schneidwerkzeuges sowohl bei vertikaler als auch bei horizontaler Bearbeitungsanordnung gut vordringt, und da das zu bearbeitende Werkstück sich außerhalb des Gehäuses befindet, haben seine Außenmaße und seine Form keine wesentliche Bedeutung und beeinflussen nicht die Abmessungen des Gehäuses und dessen Volumen.

Es ist vorteilhaft, daß am Gehäuse ein Schwimmerventil angebracht ist, und in der Rohrleitung für die Zuführung der Kühlflüssigkeit ein Elektrokontakt--Rückschlagventil eingebaut ist.

- 5 -

Dadurch wird es möglich, den Prozeß der Füllung des Gehäuses mit Kühlflüssigkeit, der Entlüftung, der hermetischen Abdichtung des Gehäuses und der Durchführung des Arbeitsvorschubs des Schneidwerkzeuges vollständig zu automatisieren.

Nachstehend wird ein konkretes Ausführungsbeispiel der Erfindung unter Hinweis auf eine Zeichnung beschrieben, in welcher die Einrichtung für die Kühlflüssigkeitszuführung zu einem Schneidwerkzeug schematisch dargestellt ist.

Die erfindungsgemäße Einrichtung enthält ein Gehäuse 1, in dem eine Öffnung 2 für einen Dorn 3 mit einem Schneidwerkzeug 4 ausgeführt ist. In der Öffnung 2 ist eine Dichtung 5 für den Dorn 3 angeordnet. In der Zone des Zusammenwirkens des Schneidwerkzeuges 4 mit einem zu bearbeitenden Werkstück 6 ist im Gehäuse 1 eine Führungsbuchse 7 mit Dichtung 8 angeordnet. Ein Hohlraum 9 des Gehäuses 1 steht mit einem Durchlaß 10 zum Entfernen von Spänen in Verbindung. Hierbei befinden sich der Durchlaß 10 zum Entfernen von Spänen und der Hohlraum 9 des Gehäuses 1 auf verschiedenen Seiten einer Stirnfläche 11 des Gehäuses 1 in der Zone des Zusammenwirkens des Schneidwerkzeuges 4 mit dem zu bearbeitenden Werkstück 6. Der Durchlaß 10 ist mit einem Deckel 12 versehen, der mit Hilfe eines Dichtungsmittels 13 den Durchlaß 10 während der Arbeit der Einrichtung hermetisch verschließt. Für das Öffnen und Schließen des Deckels 12 sorgt eine Vorrichtung 14.

Zur Vollautomatisierung des Prozesses der Füllung des Gehäuses 1 mit Kühlflüssigkeit, der Entlüftung, der hermetischen Abdichtung des Gehäuses 1 und der Einschaltung des Arbeitsvorschubs des Schneidwerkzeuges 4 ist die erfindungsgemäße Einrichtung mit einem Schwimmerventil 15 versehen, das am Gehäuse 1 vertikal angebracht ist. Außerdem ist in einer Rohrleitung 16 für die Zuführung der Kühlflüssigkeit ein Elektrokontakt-Rückschlagventil 17 eingebaut. An einer Rohrleitung 18 für die Abführung der Kühlflüssigkeit sind ein Sicherheitsventil 19 und ein Manometer 20 installiert.

Die erfindungsgemäße Einrichtung arbeitet folgendermaßen.

In der Ausgangslage ist der Dorn 3 in die Dichtung 5 eingeführt, das zu bearbeitende Werkstück 6 ist an die Dichtung 8 angedrückt, der Deckel 12 ist geschlossen.

Eine Speisepumpe 21 füllt über das Elektrokontakt-Rückschlagventil 17 den Hohlraum 9 des Gehäuses 1 mit Kühlflüssigkeit und verdrängt die Luft über das Schwimmerventil 15. Nach Füllen des Gehäuses 1 dringt die Flüssigkeit in das Schwimmerventil 15, der Schwimmer schwimmt auf und dieses Ventil 15 wird abgesperrt. Die Drücke im Gehäuse 1 und in der Rohrleitung 16 für die Zuführung der Kühlflüssigkeit gleichen sich aus und das Elektrokontakt-Rückschlagventil 17 wird abgesperrt, wobei es ein Signal zum Einschalten des Arbeitsvorschubs des Schneidwerkzeuges 4 liefert. Der Dorn 3, der sich ins Innere des hermetisch abgeschlossenen Gehäuses 1 hineinschiebt, komprimiert die dort befindliche Kühlflüssigkeit, wodurch der Druck im Gehäuse 1 auf einen Wert ansteigt, auf welchen das Sicherheitsventil 19 eingestellt ist. Bei Erreichen des vorgegebenen Drucks spricht das Manometer 20 an, das die Speisepumpe 21 abschaltet. Falls der Kühlflüssigkeitsdruck während der Bearbeitung abfällt, schaltet das Manometer 20 den Arbeitsvorschub des Schneidwerkzeuges 4 ab.

Nach beendeter Bearbeitung wird der Dorn 3 mit dem Schneidwerkzeug 4 in die Ausgangsstellung zurückgeführt, die Vorrichtung 14 öffnet den Deckel 12 und die Späne werden über den Durchlaß 10 aus dem Gehäuse 1 zusammen mit der Kühlflüssigkeit entfernt. Nach dem Wechsel des zu bearbeitenden Werkstücks 6 wird der Deckel 12 geschlossen, und der Zyklus wiederholt sich.

- 7 -

Die erfindungsgemäße      Einrichtung für die Kühlflüssigkeitszuführung zu einem Schneidwerkzeug bietet die Möglichkeit, die Leistung und Genauigkeit der Bearbeitung von Bohrungen mittels eines Schneiden aufweisenden Werkzeuges unter gleichzeitiger Erhöhung der Standzeit des verwendeten Werkzeuges zu steigern. Außerdem ist die Verwendung dieser Einrichtung sowohl für das vertikale als auch das horizontale Bearbeiten von Werkstücken beliebiger Abmessungen und Formen möglich.

Gewerbliche  Anwendbarkeit

Am zweckmäßigsten ist die vorliegende Erfindung zum Bohren von tiefen Bohrungen mittels Spiralbohrern anzuwenden.

- 8 -

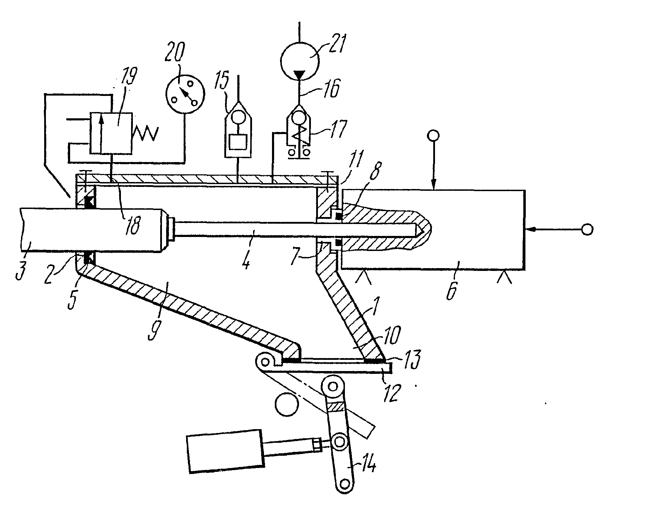

PATENTANSPRÜCHE

1. Einrichtung für die Kühlflüssigkeitszuführung zu einem Schneidwerkzeug, enthaltend ein Gehäuse (1) mit einer Öffnung (2) für einen Dorn (3) mit einem Schneidwerkzeug (4), eine Dichtung (8), die am Gehäuse (1) in der Zone des Zusammenwirkens des Schneidwerkzeuges (4) mit einem zu bearbeitenden Werkstück (6) angebracht ist, eine Rohrleitung (16) für die Zuführung der Kühlflüssigkeit ins Gehäuse (1), eine Rohrleitung (18) für die Abführung der Kühlflüssigkeit aus dem Gehäuse (1) und einen mit dem Hohlraum (9) des Gehäuses (1) in Verbindung stehenden Durchlaß (10) zum Entfernen von Spänen, dadurch g e k e n n z e i c h n e t, daß in der Einrichtung ein Sicherheitsventil (19) vorgesehen ist, das in der Rohrleitung (18) für die Abführung der Kühlflüssigkeit eingebaut ist, das Gehäuse (1) in der Anordnungszone des Dornes (3) mit einer Dichtung (5) versehen ist, sowie der Durchlaß (10) zum Entfernen von Spänen und der Hohlraum (9) des Gehäuses (1) auf verschiedenen Seiten von der Stirnfläche (11) des Gehäuses (1) in der Zone des Zusammenwirkens des Schneidwerkzeuges (4) mit dem zu bearbeitenden Werkstück (6) angeordnet sind.

2. Einrichtung nach Anspruch 1, dadurch g e k e n n z e i c h n e t, daß am Gehäuse (1) ein Schwimmerventil (15) angebracht ist, und in der Rohrleitung (16) für die Zuführung der Kühlflüssigkeit ein Elektrokontakt-Rückschlagventil (17) eingebaut ist.

# INTERNATIONAL SEARCH REPORT

**I. CLASSIFICATION OF SUBJECT MATTER** (if several classification symbols apply, indicate all) *

According to International Patent Classification (IPC) or to both National Classification and IPC

IPC$^4$　　B 23 Q 11/10

**II. FIELDS SEARCHED**

Minimum Documentation Searched [7]

| Classification System | Classification Symbols |
|---|---|
| IPC$^4$ | B 23 Q 11/10 |

Documentation Searched other than Minimum Documentation
to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | SU, A1, 823077, (Spetsialnoe konstruktorskoe bjuro almazno-rastochnykh i radialno-sverlilnykh stankov) 5 May 1981 (05.05.81) -- | 1-2 |
| A | G.I. Melamed et al. "Qgregatnye stanki", 1964, Mashinostroenie (Moscow), see pages 223-224 -- | 1-2 |
| A | FR, A, 869256, (DEUTSCHE EDELSTAHLWERKE AKTIENGESELLSCHAFT) 28 January 1942 (28.01.42) see the drawings, page 2, lines 87-104; page 3, lines 1-66 -- | 1-2 |
| A | EP, A1, 0252611, (OKINAGA HIROAKI) 13 January 1988 (13.01.88), see figure 1, column 2, lines 44-54; column 3; column 4, lines 1-8 --- | 1-2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 11 April 1989 (11.04.89) | 23 March 1989 (23.03.89) |

| International Searching Authority | Signature of Authorized Officer |
|---|---|
| ISA/SU | |

Form PCT/ISA/210 (second sheet) (January 1985)